# EUROPÄISCHE PATENTSCHRIFT

(11) **EP 1 738 955 B1**
(45) Veröffentlichungstag und Bekanntmachung des Hinweises auf die Patenterteilung: **06.04.2011**
(21) Anmeldenummer: 06114205.5
(22) Anmeldetag: 19.05.2006
(51) Int. Cl.: B60N 2/66

(54) **Fahrzeugsitz mit einer flexiblen Rückenlehne**
Vehicle seat with a flexible backrest
Fauteuil à dossier souple

(30) Priorität: 29.06.2005 DE 102005030792; 29.07.2005 DE 102005035586
(43) Veröffentlichungstag der Anmeldung: 03.01.2007
(73) Patentinhaber: GRAMMER AG, 92224 Amberg (DE)
(72) Erfinder: Übelacker, Roland, 93536 Pfreimd (DE); Kohl, Josef, 92242 Hirschau (DE)
(74) Vertreter: Hannke, Christian

(56) Entgegenhaltungen:
- WO-A-93/03652
- DE-A1- 2 064 419
- DE-A1- 19 957 965
- DE-A1-102004 012 850

## Beschreibung

Die Erfindung betrifft einen Fahrzeugsitz mit Rückenlehne und Sitzteil, wobei die Rückenlehne einen Rückenlehnenrahmen und dazwischen angeordnete Elemente zur Bildung einer S-förmigen Rückenlehne mit einem in Vorwärts- oder Rückwärtsrichtung verformbaren Schulterbereich und einem in Vorwärts- oder Rückwärtsrichtung verformbaren Lendenwirbelbereich umfasst.

Fahrzeugsitze mit verformbaren Rückenlehnen sind herkömmlicherweise mit einer verstellbaren Lendenstütze im Bereich der Lendenwirbel einer den Fahrzeugsitz benutzenden Person ausgestattet. Derartige Lendenstützen können sowohl in Vorwärts- als auch in Rückwärtsrichtung verstellt werden, um durch eine konvexartige Verformung der Rückenlehne im Lendenwirbelbereich eine mehr oder weniger starke Stütze für die Person in Abhängigkeit davon, ob diese ein mehr oder weniger starkes Hohlkreuz aufweist, zur Erhöhung des Komforts zur Verfügung zu stellen.

Derartige Lendenwirbelstützen werden von Personen in Ihrer Verformung voreingestellt und verbleiben in dieser Form, bis die Person beispielsweise durch Betätigung eines Handrades diese neu einstellt. Dies erfordert die Zuhilfenahme mindestens einer Hand, welche während des Fahrzustandes des Fahrzeuges häufig nicht zur Verfügung steht. Zudem weisen derartige Fahrzeugsitze eine den Lendenwirbelbereich und den Schulterbereich der sie benutzenden Personen angepasste S-Form auf, die auf eine Durchschnittsgröße der Person gerichtet ist. Eine derartige S-förmige Rückenlehne umfasst den in Fahrtrichtung gesehenen konkav ausgebildeten Schulterbereich und den konvex ausgebildeten Lendenwirbelbereich, die an die Wirbelsäulenform eines durchschnittlich großen Menschen angepasst sind. Derartige überwiegend unflexibel ausgebildete S-förmige Rückenlehnen können lediglich durch eine Verstellung der Lendenwirbelstütze geringfügig in ihrer Form verändert werden. Dies hat zur Folge, dass überdurchschnittlich große und kleine Menschen einen geringen Sitzkomfort in derartigen Fahrzeugsitzen genießen.

Weiterhin sind Sitze bekannt, deren Rückenlehne sich in ihrer S-Form durch ein Nachhintenneigen der Rückenlehne verstellt, wodurch sich die Blickrichtung der den Sitz benutzenden Person verändert und sich eine ungewollte Veränderung des Winkels zwischen Ober- und Unterkörper der Person einstellt.

Fahrzeugsitze mit Rückenlehnen, die lediglich einen in Vorwärts- oder Rückwärtsrichtung verstellbaren Lendenwirbelbereich zur Unterstützung einer Lordose oder Kyphose aufweisen, sind - auch wenn der derartige Lordosenstützen unterschiedlichst ausgeprägt sein können - auf die untere Hälfte des Rückenbereiches einer den Fahrzeugsitz benutzenden Person begrenzt. Der Schulter- und Halsbereich hingegen wird häufig unverändert beibehalten, woraus sich eine auf Dauer unkomfortable Sitzhaltung der sitzbenutzenden Person ergibt.

Einen allenfalls begrenzten Ausgleich einer veränderten Rückenverstellung im Schulterbereich der Rückenlehne, die mit einer veränderten Lordosenstellung oder einer Neigungsverstellung der Rückenlehne einhergehen kann, findet durch eine starke Polsterung der Rückenlehne statt. Hierbei passt sich allerdings nicht die Rückenlehne an sich sondern lediglich das Polster selber an die neue Form des Schulterbereiches an. Dies lässt aufgrund der ständig aufrechtzuerhaltenden Druckausübung auf das Polster und des lediglich begrenzt nachgebenden Polsters an stärker druckbeaufschlagten Stellen einen sehr begrenzten Sitzkomfort zu.

Ein gattungsgemäßer Fahrzeugsitz ist aus der DE-A-102004012850 bekannt.

Demzufolge liegt der vorliegenden Erfindung die Aufgabe zugrunde, einen Fahrzeugsitz mit Rückenlehne zur Verfügung zu stellen, die insbesondere in ihrem Schulterbereich und ihren Hals-Kopf-Bereich, gegebenenfalls weitestgehend unabhängig von der Form in ihrem Lendenwirbelbereich, eine komfortable Sitzstellung für die den Fahrzeugsitz benutzenden Person zulässt, ohne hierfür weitere Handbetätigungen zu benötigen.

Diese Aufgabe wird durch die Merkmale des Patentanspruches 1 gelöst.

Kerngedanke der Erfindung liegt darin, dass bei einem Fahrzeugsitz mit einer Rückenlehne und einem Sitzteil, wobei die Rückenlehne einen Rückenlehnenrahmen und dazwischen angeordnete Elemente zur Bildung einer S-förmigen Rückenlehne mit einem in Vorwärtsund Rückwärtsrichtung verformbaren Schulterbereich und einen in Vorwärts- oder Rückwärtsrichtung verformbaren Lendenwirbelbereich umfasst, die Elemente ein sich in Längsrichtung des Rückenlehnenrahmen erstreckendes flexibles, plattenartiges Element, welches ober- und unterseitig an einen oberen und unteren Ende des Rückenlehnenrahmens flexibel befestigt ist, umfassen. Zusätzlich ist mindestens ein im Hals-Kopf-Bereich zwischen der Rückseite des plattenartigen Elements und dem Rückenlehnenrahmen scharnierartiges Element angeordnet, mittels dessen Schwenkbewegung eine vor- oder rückwärtsgerichtete Parallelverschiebung der Rückenlehne im Hals-Kopf-Bereich durchführbar ist, wobei das scharnierartige Element federnd im Bereich des oberen Endes des Rückenlehnenrahmens aufgehängt ist.

Aufgrund der hierdurch bewirkten vor- oder rückwärtsgerichteten Parallelverschiebung im Hals-Kopf-Bereich der Rückenlehne in Verbindung mit dem flexibel ausgebildeten plattenartigen Element, welches hängenmattenartig zwischen dem oberen und unteren Ende des Rückenlehnenrahmen aufgehängt ist, wird ein maximaler Sitzkomfort ab dem Lendenwirbelbereich über den Schulterbereich bis hin zu dem Hals-Kopf-Bereich sichergestellt. Denn ein Aufklappen beziehungsweise Aufstellen des scharnierartigen Elementes bewirkt ein Nachvorneverschieben der gesamten oberen Hälfte des plattenartigen Elementes gegenüber dem Rückenlehnenrahmen, wobei die Flexibilität des plattenartigen Elementes mit dazu beiträgt, dass insbesondere der Schulterbereich eine flexible Anpassung an die Form der Schulter der den Fahrzeugsitz benutzenden Person erfährt.

Eine derartige Anpassung des plattenartigen Elements, welches als Kunststoffplatte ausgebildet sein kann, im oberen Schulterbereich kann durch die zusätzliche Anordnung eines wippenartigen Elementes im Lendenwirbelbereich auf die momentane Lordose- beziehungsweise Kyphosestellung des Rückens der Person abgestimmt werden. Denn durch ein derartiges wippenartiges Element, welches um eine horizontalverlaufende Schwenkachse schwenkbar angeordnet ist und sich zumindest teilweise entlang der Rückseite des plattenartigen Elementes in dessen Längsrichtung erstreckt, wird ein fließender Übergang der mehr oder weniger stark ausgebildeten Lordose- beziehungsweise Kyphosestellung der Person in eine mehr oder weniger stark gewölbte Schulterform erreicht. Hierbei wird durch die horizontal verlaufende Schwenkachse des wippenartigen Elementes eine fiktive tal verlaufende Schwenkachse des wippenartigen Elementes eine fiktive horizontalverlaufende Drehachse des plattenförmigen Elementes dargestellt, um welche sich das Element im Lendenwirbelbereich nach hinten bewegt während es im Schulterbereich nach vorne bewegt wird beziehungsweise im Kopf-Hals-Schulterbereich parallel nach vorne verschoben wird oder vice versa.

Gemäß einer bevorzugten Ausführungsform ist die Schwenkachse des wippenartigen Elementes in Längsrichtung der Rückenlehne verschiebbar und dadurch höhenverstellbar, um hierdurch eine optimierte Anpassung an unterschiedliche Lordosenhöhenstellungen der Personen zu erhalten. Zusätzlich kann eine derartige Wippe in Vorwärts- oder Rückwärtsrichtung verschiebbar ausgebildet sein, woraus sich unterschiedlich starke Lordose- oder Kyphosestellungen ergeben.

Das scharnierartige Element ist gemäß einer bevorzugten Ausführungsform als Kniehebelscharnier mit einer sich horizontal erstreckenden Scharnierachse ausgebildet, die einer zwischen der Rückseiten des plattenartigen Elementes und einer Querstrebe des Rückenlehnenrahmens in Rückenlehnenbreitenrichtung verlaufend angeordnet ist. Eine derartige Scharnierachse wird federnd am oberen Ende des Rückenlehnenrahmens aufgehängt. Hierbei ist ein erstes Ende des Kniehebelscharniers an der Rückseite des plattenartigen Elementes und ein zweites Ende an der Querstrebe gelenkartig aufgehängt. Auf diese Weise wird durch das Kniehebelscharnier eine Gegenkraft erzeugt, die mit dazu beiträgt, dass die Person durch Druckausübung auf das plattenartige Element im Hals-Kopf-Bereich eine gewollte Nachhinten-Parallelverschiebung dieses Rückenlehnenbereichs erfährt und bei Nachlassen der geringfügig ausgeübten Druckbeaufschlagung ein Nachvorneverschieben des plattenartigen Elementes im oberen Rückenbereich automatisch beziehungsweise selbsttätig stattfindet.

Alternativ können anstelle eines Kniehebelscharniers mindestens eine, jedoch bevorzugt zwei parallel übereinanderverlaufende Platten verwendet werden, welche in ihrer Länge verstellbar sind. Die Platten sind mit einem ersten Ende an der Rückseite des plattenartigen Elementes und mit einem zweiten Ende an einer Querstrebe des Rückenlehnenrahmens und jeweils eine sich in Rückenlehnenbreitenrichtung erstreckende Schwenkachse schwenkbar angebracht. Hierdurch wird durch ein Nachuntenwegklappen der Platten eine nachhintengerichtete Parallelverschiebung des Hals-Kopf-Bereiches gleichzeitig mit einem Nachuntenverschieben des im oberen Bereich lose aufgehängten plattenartigen Elementes zur Schaffung der nötigen Wölbung im Schulterbereich bewirkt. Ein Aufstellen der beiden Platten hingegen bewirkt nicht nur ein parallel gerichtetes Nachvorneverschieben des Hals-Kopf-Bereiches des plattenartigen Elementes, sondern auch ein Nachobenziehen des plattenartigen Elementes in diesem oberen Bereich, woraus sich zwingend ein weniger gewölbter Schulterbereich und somit ein erhöhter Sitzkomfort ergibt.

Erfindungsgemäß ist das plattenartige Element oberseitig am oberen Rand des Rückenlehnenrahmens federnd befestigt und an seinem unteren Ende scharnierartig befestigt. Auf diese Weise wird eine maximal mögliche Flexibilität in der Bewegung des plattenartigen Elementes aufgrund der verschiedenen Wölbungen im Schulter- und Lendenwirbelbereich sowie der Parallelverschiebung im Hals-Kopf-Bereich erhalten.

Gemäß einer bevorzugten Ausführungsform kann das plattenartige Element in dessen Längsrichtungsverlauf unterschiedliche Breiten- und/oder Tiefenabmessungen aufweisen. Hierdurch ergeben sich aufgrund der vorhandenen Flexibilität des plattenartigen Elementes unterschiedliche Dehnungsabschnitte in dem Element, die zu einem erhöhten Sitzkomfort beitragen können.

Weitere vorteilhafte Ausführungsformen ergeben sich aus den Unteransprüchen.

Vorteile und Zweckmäßigkeiten sind der nachfolgenden Beschreibung in Verbindung mit der Zeichnung zu entnehmen. Hierbei zeigen:
- Fig. 1: in einer schematischen perspektivischen Darstellung einen Fahrzeugsitz gemäß einer ersten Ausführungsform der Erfindung;
- Fig. 2: in einer schematischen seitlichen Ausschnittsdarstellung verschiedene Stellungen der erfindungsgemäßen Rückenlehne des Fahrzeugsitzes gemäß der ersten Ausführungsform der Erfindung;
- Fig. 3: in einer schematischen perspektivischen Darstellung einen Fahrzeugsitz gemäß einer zweiten Ausführungsform der Erfindung;
- Fig. 4: in einer schematischen seitlichen Ausschnittsdarstellung verschiedene Stellungen der Rückenlehne des Fahrzeugsitzes gemäß der zweiten Ausführungsform der Erfindung;
- Fig. 5: den Fahrzeugsitz gemäß einer dritten Ausführungsform der Erfindung, und
- Fig. 6: in einer schematischen seitlichen Ausschnittsdarstellung verschiedene Stellungen der Rückenlehne des Fahrzeugsitzes gemäß der dritten Ausführungsform der Erfindung.

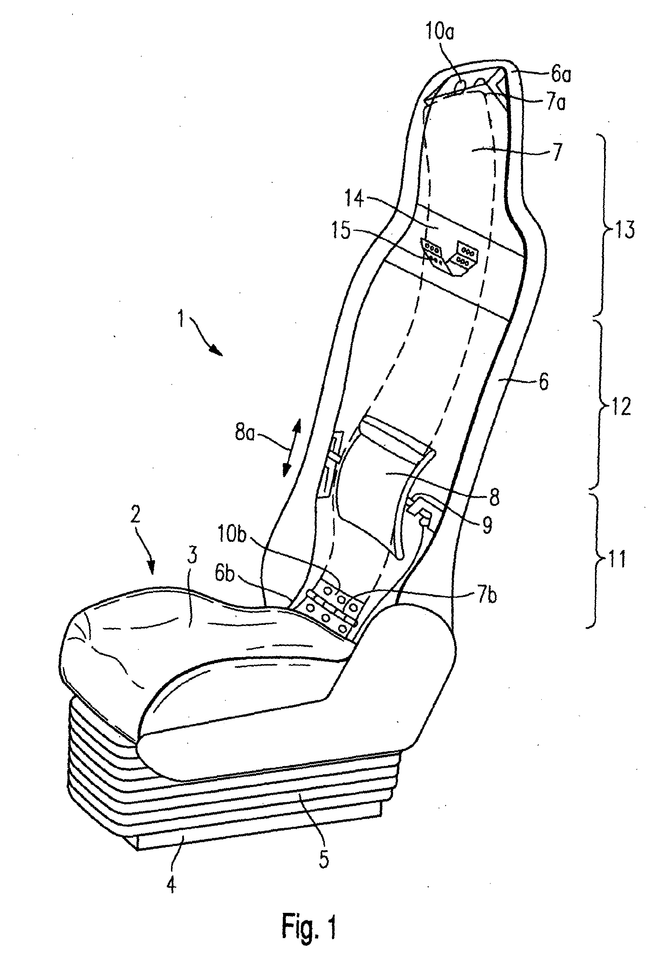

In Fig. 1 wird in einer perspektivischen Darstellung ein Fahrzeugsitz einer ersten Ausführungsform der Erfindung gezeigt. Der Fahrzeugsitz setzt sich aus einer Rückenlehne 1 und einem Sitzteil 2 zusammen, wobei das Sitzteil 2 ein Sitzpolster 3, ein Sitzgestell 4 sowie eine balkartige Verkleidung 5 aufweist. Die Rückenlehne 1 umfasst einen Rückenlehnenrahmen 6 und ein dazwischen angeordnetes hängemattenartig aufgehängtes plattenartiges Element 7 mit einem ersten oberen Ende 7a und einem zweiten unteren Ende 7b.

Der Hängematteneffekt wird durch ein am unteren Ende 6b des Rückenlehnenrahmens 6 angebrachtes Scharnier 10b, welches mit dem unteren Ende 7b des plattenartigen Elementes 7 verbunden ist, einerseits und mit einem scharnierartigen Element 15, welches zwischen einer Querstrebe 14 des Rückenlehnenrahmens 6 und einer Rückseite des plattenartigen Elementes 7 angeordnet ist, andererseits erreicht. Zusätzlich sind vorteilhaft flexible Verbindungselemente 10a am oberen Ende 7a des plattenartigen Elementes zur Anbindung an das obere Ende 6a des Rückenlehnenrahmens 6 zur Schaffung eines weitestgehend freihängenden Endes 7a angeordnet.

Eine Wippe 8 ist auf der Rückseite des plattenartigen Elementes 7 derart angeordnet, dass sie um eine in Horizontalrichtung verlaufende Schwenkachse 9 geschwenkt werden kann, um eine mehr oder weniger stark geprägte Lordose- beziehungsweise Kyphosestellung zu erhalten. Diese Schwenkachse 9 kann in Höhenrichtung 8a auf- beziehungsweise abwärts geschoben werden, um hierdurch eine Anpassung an die Höhe des Lendenwirbelbereiches 11 der den Fahrzeugsitz benutzenden Person zu erreichen.

Die Rückenlehne 1 teilt sich im Wesentlichen in den Lendenwirbelbereich 11, den Schulterbereich 12 und den Hals-Kopf-Bereich 13 auf.

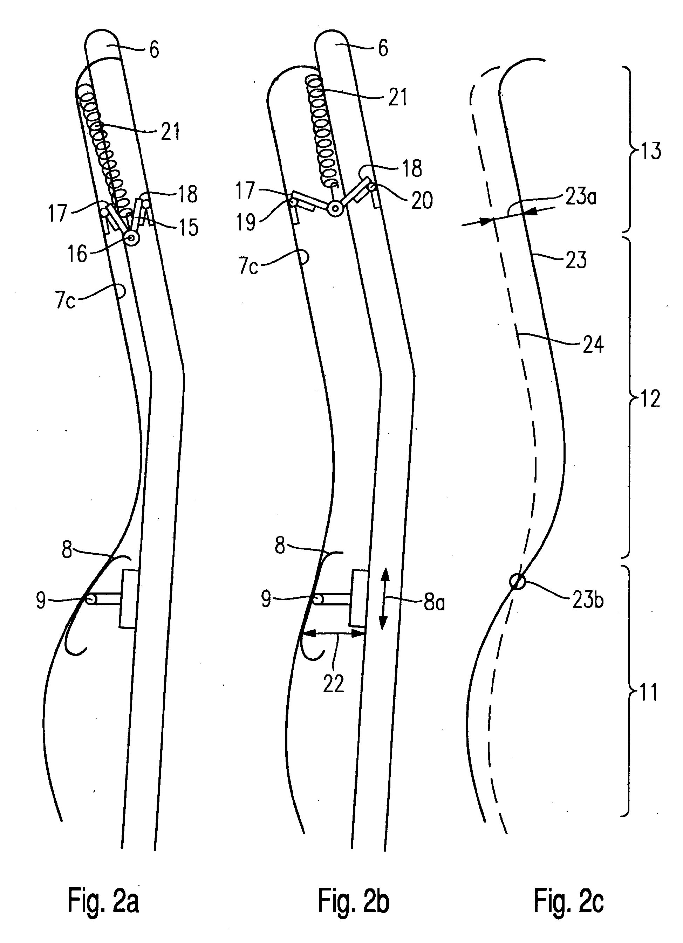

In Fig. 2 wird in einer schematischen seitlichen Ausschnittsdarstellung der obere Abschnitt der Rückenlehne 1 in verschiedenen Stellungen dargestellt. In den Abbildungen gemäß Figuren 2a und 2b wird die Rückenlehne mit einem als Kniehebelscharnier 15 ausgebildeten scharnierartigen Element in ihrem oberen Hals-Kopf-Bereich gegenüber der Querstrebe 14 des Rückenlehnenrahmens gestützt.

Gemäß Figur 2a liegt das Kniehebelscharnier 15 im eingeklappten Zustand vor, in welchem eine freihängende Scharnierachse 16, welche an einer Feder 21 gegenüber dem Rückenlehnenrahmen 6 aufgehängt ist, nach unten weggeklappt ist.

Zwei mit dem Scharniergelenk beziehungsweise der Scharnierachse 16 verbundene Platten 17, 18 sind gelenkig an der Rückseite 7c des plattenartigen Elementes 7 einerseits und der Querstrebe 14 des Rückenlehnenrahmens 6 andererseits angeordnet. Auf diese Weise kann bei Aufklappen des Kniehebelscharniers, wie es in Fig. 2b dargestellt wird, eine Schwenkbewegung der Platten 17, 18 gegenüber der Rückseite 7c und der Querstrebe 14 des Rückenlehnenrahmens 6 bewirkt werden. Eine derartige Aufstellung des Kniehebelscharniers wird aufgrund der Zugfederkraft der Zugfeder 21 bewirkt, sobald eine den Fahrzeugsitz benutzende Person mit ihrem Oberkörper nicht mehr das plattenartige Element 7 im Schulter und Hals-Kopf-Bereich 12, 13 nach hinten drückt. Idealerweise ist ein derartiges Nachhintendrücken bereits mit geringsten Kräften möglich, wobei die hierfür ausschlaggebende Gegenkraft durch die Zugfederkraft der Zugfeder 21 wiedergegeben wird.

In Fig. 2c wird in einer schematischen Darstellung der Verlauf des plattenartigen Elementes 7, welches als Kunststoffplatte ausgebildet sein kann, bei einem aufgestellten und eingeklappten Kniehebelscharnier 15 wiedergegeben. Dieser Darstellung ist deutlich zu entnehmen, dass im Hals-Kopf-Bereich das Element 7 eine Parallelverschiebung gemäß dem Bezugszeichen 23a erfährt, wobei das Bezugszeichen 23 eine Position der Kunststoffplatte mit eingeklappten Kniehebelscharnier und das Bezugszeichen 24 eine Position der Kunststoffplatte mit ausgeklappten Scharnier wiedergibt.

Diese Darstellung gemäß Figur 2c zeigt deutlich, dass bei einer derartigen Parallelverschiebung des oberen Bereichs eine Drehung der Kunststoffplatte um einen fiktiven Drehpunkt 23b, der auf der Höhe der Drehachse 9 der Wippe 8 liegt, stattfindet. Bei einer derartigen Drehung wird die Wippe 8, wie in den Figuren 2a und 2b gezeigt, mehr oder weniger geneigt.

Gemäß den Bezugszeichen 22 kann die Wippe nicht nur nach oben und unten sondern auch nach vorne und nach hinten zur optimalen Anpassung an die Rückenform der Person verschoben werden.

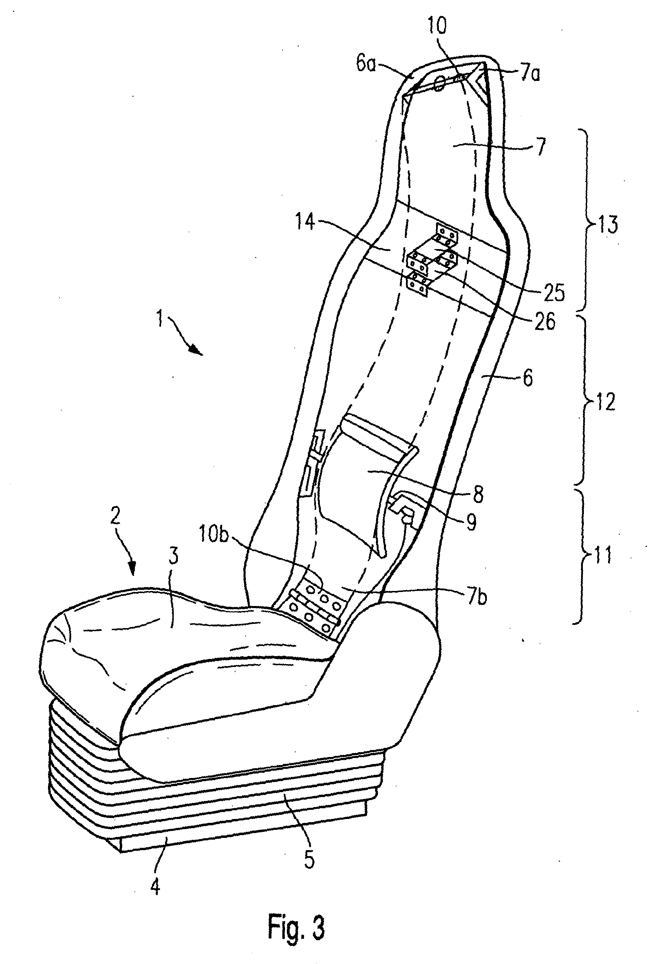

In Figur 3 wird in einer perspektivischen Darstellung ein Fahrzeugsitz gemäß einer zweiten Ausführungsform der Erfindung gezeigt. Gleiche und gleichbedeutende Bauteile sind mit gleichen Bezugszeichen versehen.

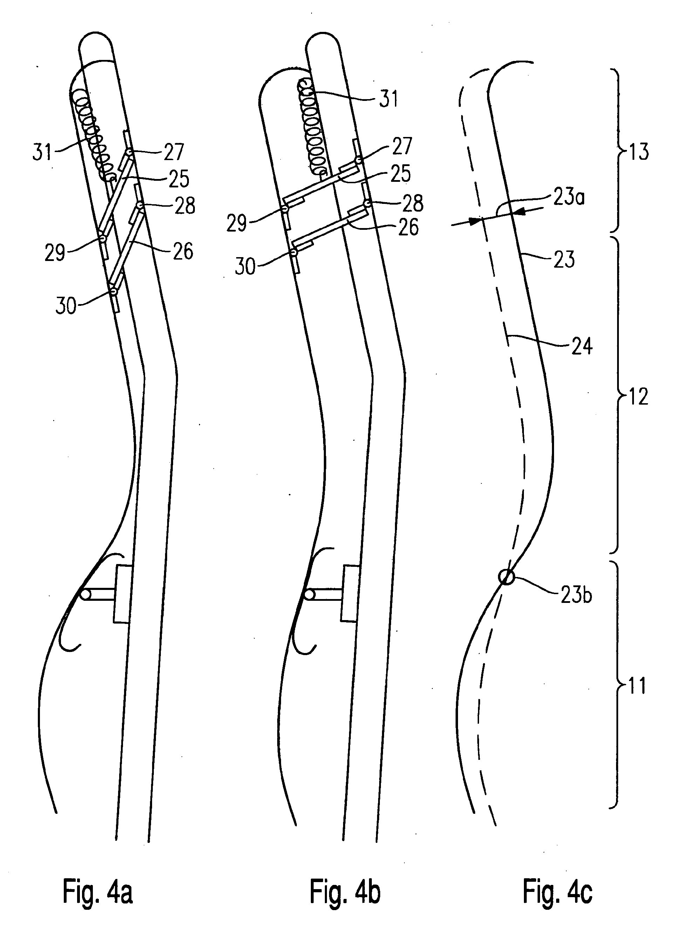

Der in Figur 3 dargestellte Fahrzeugsitz gemäß der zweiten Ausführungsform unterscheidet sich von demjenigen gemäß der ersten Ausführungsform darin, dass anstelle eines Kniehebelscharniers 15 zwei Platten 25, 26, welche parallel zueinander verlaufend angeordnet sind, wie es aus Figur 4a und 4b hervorgeht, verwendet sind. Diese Platten 25, 26 sind ebenso gegenüber der Rückseite 7c der Kunststoffplatte 7 als auch gegenüber der Querstrebe 14 des Rückenlehnenrahmens 6 mit ihren ersten und zweiten Enden 27, 28, 29, 30 gelenkig angeordnet.

Eine zugfederkraftausübende Zugfeder 31 ist einerseits an ihrem oberen Ende mit dem Rückenlehnenrahmen 6 und mit ihrem unteren Ende - beispielsweise mittels einer Öse - mit der oberen Platte 25 verbunden.

Vorteilhaft lassen sich die Platten in ihrer Länge verschieben, sodass unterschiedlich starke Parallelverschiebungen des Hals-Kopf-Bereichs auf Wunsch der den Fahrzeugsitz benutzenden Person erhalten werden können.

Der Figur 4a und Figur 4b ist deutlich zu entnehmen, dass eine Verformung der Kunststoffplatte 7 im Schulter- und Kopf-Hals-Bereich 12, 13 mit einem fließenden Übergang im Bereich der Wippe 8 zu dem Lendenwirbelbereich 11 einhergeht. Dies wird aufgrund der Schwenkbewegung der Wippe 8 um ihre Drehachse 9 erreicht.

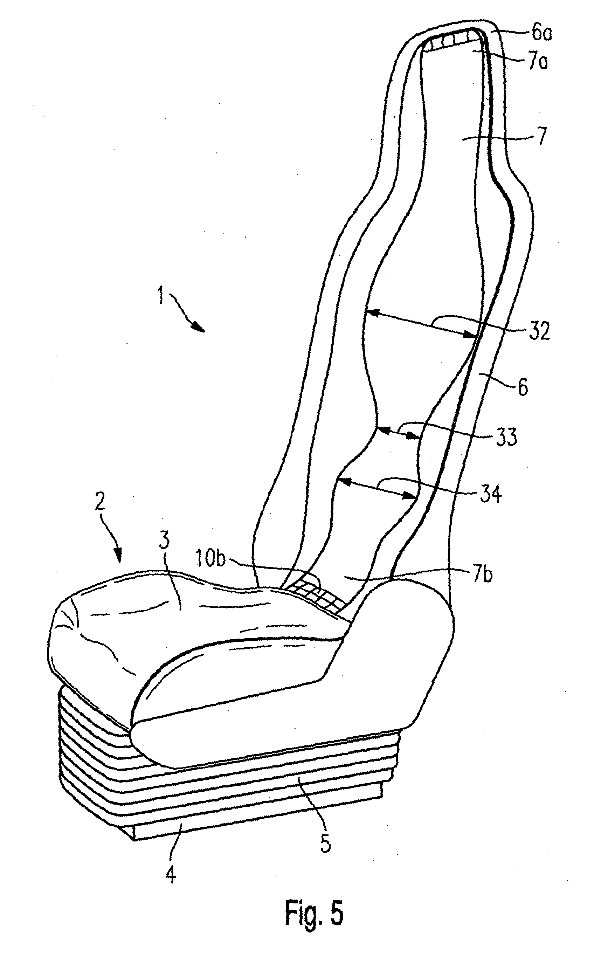

In Figur 5 wird in einer perspektivischen Darstellung ein Fahrzeugsitz gemäß einer weiteren dritten Ausführungsform der Erfindung gezeigt. Gleiche und gleichbedeutende Teile sind mit gleichen Bezugszeichen versehen.

Der Fahrzeugsitz gemäß der dritten Ausführungsform der Erfindung weist eine Taillierung gemäß den Bezugszeichen 32-34 mit unterschiedlich breiten Abschnitten der Kunststoffplatte auf. Auf diese Weise wird ein unterschiedlich starker Flexibilitätsgrad und somit ein erhöhter Sitzkomfort an verschiedenen Bereichen der Kunststoffplatte erhalten.

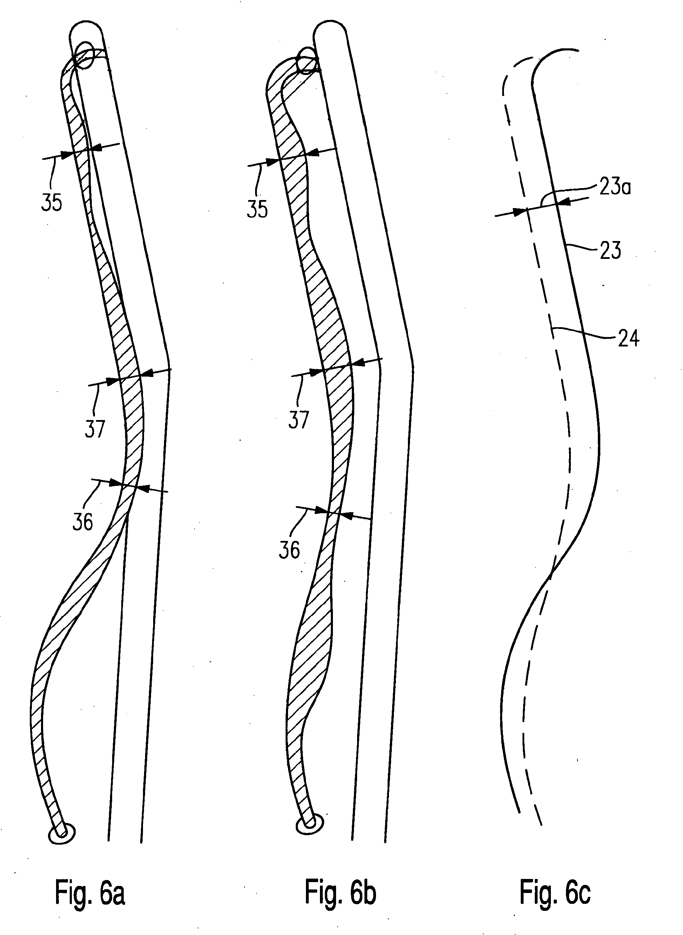

Gemäß Figuren 6a und 6b kann zusätzlich eine derartige Taillierung in der Kunststoffplattenstärke vorhanden sein, wie es durch die Bezugszeichen 35, 36 und 37 wiedergegeben wird. Dies trägt ebenso zu einer Ausbildung der Platte mit unterschiedlichen Flexibilitätsgraden in verschiedenen Plattenabschnitten sowie unterschiedlich starken Stabilitätsgraden zur Abstützung des Rückens der den Fahrzeugsitz benutzenden Person bei.

In Figur 6c wird wiederum in einer schematischen Darstellung der Verlauf der Kunststoffplatte bei ein- und ausgeklappten scharnierartigen Elementen gezeigt.

Sämtliche in den Anmeldungsunterlagen offenbarten Merkmale werden als erfindungswesentlich beansprucht, sofern sie einzeln oder in Kombination gegenüber dem Stand der Technik neu sind.

### Bezugszeichenliste

- 1: Rückenlehne
- 2: Sitzteil
- 3: Sitzpolster
- 4: Sitzgestell
- 5: balkartige Verkleidung
- 6: Rückenlehnenrahmen
- 6a: oberes Ende des Rückenlehnenrahmens
- 6b: unteres Ende des Rückenlehnenrahmens
- 7: plattenartiges Element
- 7a: oberes Ende des plattenartigen Elementes
- 7b: unteres Ende des plattenartigen Elementes
- 8: wippenartiges Element
- 8a: Verschieberichtung des wippenartigen Elementes
- 9: Schwenkachse des wippenartigen Elementes
- 10a: Verbindungsstücke
- 10b: Scharnier
- 11: Lendenwirbelbereich
- 12: Schulterbereich
- 13: Hals-Kopf-Bereich
- 14: Querstrebe
- 15: Kniehebelscharnier
- 16: Scharnierachse des Kniehebelscharniers
- 17, 18: Platten des Kniehebelscharniers
- 19, 20: Enden des Kniehebelscharniers
- 21: Zugfeder
- 22: Verschiebebewegung des wippenartigen Elementes
- 23, 24: Kunststoffplattenverlauf
- 23a: Parallelverschieberichtung
- 23b: fiktiver Drehpunkt
- 25, 26: Platten
- 27, 28, 29, 30: gelenkig ausgebildete Enden der Platten
- 31: Zugfeder
- 32, 33, 34: Breitenabmessungen der Kunststoffplatte 7
- 35, 36, 37: Dickenabmessungen der Kunststoffplatte 7

## Patentansprüche

1. Fahrzeugsitz mit Rückenlehne (1) und Sitzteil (2), wobei die Rückenlehne (1) einen Rückenlehnenrahmen (6) und dazwischen angeordnete Elemente (7, 8, 15, 25, 26) zur Bildung einer Rückenlehne (1) mit einem in Vorwärts- oder Rückwärtsrichtung verformbaren Schulterbereich (12) und einem in Vorwärts- oder Rückwärtsrichtung verformbaren Lendenwirbelbereich (11) umfasst und die Elemente (7, 8, 15, 25, 26) ein sich in Längsrichtung des Rückenlehnenrahmens (6) erstreckendes, flexibles, plattenartiges Element (7), welches ober- und unterseitig (7a, 7b) an einem oberen und unteren Ende (6a, 6b) des Rückenlehnenrahmens (6) flexibel befestigt ist, aufweisen, wobei
im Hals-Kopf-Bereich (13) zwischen der oberen Rückseite (7c) des plattenartigen Elements (7) und dem Rückenlehnenrahmen (6) mindestens ein scharnierartiges Element (15; 25, 26), mittels dessen Schwenkbewegung eine vor- oder rückwärtsgerichtete Parallelverschiebung (23a) der S-förmig ausgebildeten Rückenlehne (1) im Hals-Kopf-Bereich (13) durchführbar ist, angeordnet ist, **dadurch gekennzeichnet, dass** das scharnierartige Element (15; 25; 26) federnd im Bereich des oberen Endes des Rückeniehnenrahmens (6) aufgehängt ist.

2. Fahrzeugsitz nach Anspruch 1,
**gekennzeichnet durch**
ein im Lendenwirbelbereich (11) angeordnetes um eine horizontal verlaufende Schwenkachse (9) schwenkbares wippenartiges Element (8), welches sich zumindest teilweise entlang der Rückseite (7c) des plattenartigen Elementes (7) in deren Längsrichtung erstreckt.

3. Fahrzeugsitz nach Anspruch 2,
**dadurch gekennzeichnet, dass**
die Schwenkachse (9) in Längsrichtung der Rückenlehne (1) verschiebbar (8a) und dadurch höhenverstellbar ist.

4. Fahrzeugsitz nach einem der vorangegangenen Ansprüche,
**dadurch gekennzeichnet, dass**
das scharnierartige Element als Kniehebelscharnier (15) mit einer sich horizontal erstreckenden Scharnierachse (16), die zwischen der Rückseite (7c) des plattenartigen Elements (7) und einer Querstrebe (14) des Rückenlehnenrahmens (6) in Rückenlehnenbreitenrichtung verlaufend angeordnet ist, ausgebildet ist.

5. Fahrzeugsitz nach Anspruch 4,
**dadurch gekennzeichnet, dass**
die Scharnierachse (16) federnd am Rückenlehnenrahmen aufgehängt ist.

6. Fahrzeugsitz nach Anspruch 4 oder 5,
**dadurch gekennzeichnet, dass**
ein erstes Ende (19) des Kniehebelscharniers (15) an der Rückseite des plattenartigen Elements (7) und ein zweites Ende (20) an der Querstrebe (14) gelenkartig aufgehängt sind.

7. Fahrzeugsitz nach einem der Ansprüche 1-3,
**dadurch gekennzeichnet, dass**
das scharnierartige Element als mindestens eine Platte (25, 26), welche mit einem ersten Ende (29, 30) an der Rückseite (7c) des plattenartigen Elements (7) und mit einem zweiten Ende (27, 28) an einer Querstrebe (14) des Rückenlehnenrahmens um jeweils eine sich in Rückenlehnenbreitenrichtung erstreckende Schwenkachse schwenkbar angebracht ist, ausgebildet ist.

8. Fahrzeugsitz nach einem der vorangegangenen Ansprüche,
**dadurch gekennzeichnet,dass**
das plattenartige Element (7) oberseitig (7a) an dem oberen Ende (6a) des Rückenlehnenrahmens (6) federnd und/oder freihängend (21, 31; 10a) befestigt ist.

9. Fahrzeugsitz nach einem der vorangegangenen Ansprüche,
**dadurch gekennzeichnet, dass**
das plattenartige Element (7) unterseitig (7b) mit dem unteren Ende (6b) des Rückenlehnenrahmens (6) scharnierartig (10b) verbunden ist.

10. Fahrzeugsitz nach einem der vorangegangenen Ansprüche,
**dadurch gekennzeichnet, dass**
dass das plattenartige Element (7) in dessen Längsrichtungsverlauf unterschiedliche Breiten- und/oder Tiefenabmessungen (32-37), wie Taillierungen, aufweist.

## Claims

1. Vehicle seat with a backrest (1) and a seat part (2), wherein the backrest (1) comprises a backrest frame (6) and elements (7, 8, 15, 25, 26) arranged therebetween so as to form an backrest (1) having a shoulder region (12) which can be deformed in the forward or backward direction and a lumbar spine region (11) which can be deformed in the forward or backward direction and the elements (7, 8, 15, 25, 26) have a flexible panel-like element (7) which extends in the longitudinal direction of the backrest frame (6) and which is flexibly fixed at a top and bottom (7a, 7b) to an upper and lower end (6a, 6b) of the backrest frame (6), wherein at least one hinge-like element (15; 25, 26) is arranged in the neck and head region (13) between the upper rear side (7c) of the panel-like element (7) and the backrest frame (6), wherein a forward or backward parallel displacement (23a) of the S-shaped backrest (1) in the neck and head region (13) can be carried out by means of the pivoting movement of said hinge-like element, **characterized in that**, the hinge-like element (15, 25, 26) is suspended in a spring-mounted manner within the range of the upper end of the backrest frame (6).

2. Vehicle seat according to Claim 1, **characterized by** a rocker element (8) which is arranged in the lumbar spine region (11) and which can pivot about a horizontally running pivot axle (9), said rocker element extending at least partially along the rear (7c) of the panel-like element (7) in the longitudinal direction of the latter.

3. Vehicle seat according to Claim 2, **characterized in that** the pivot axle (9) can be displaced (8a) in the longitudinal direction of the backrest (1) and as a result is height-adjustable.

4. Vehicle seat according to any of the preceding claims, **characterized in that** the hinge-like element is designed as a toggle joint (15) with a horizontally extending hinge pin (16) which is arranged to run between the rear (7c) of the panel-like element (7) and a transverse strut (14) of the backrest frame (6) in the width direction of the backrest.

5. Vehicle seat according to Claim 4, **characterized in that** the hinge pin (16) is suspended in a spring-mounted manner on the backrest frame.

6. Vehicle seat according to Claim 4 or 5, **characterized in that** a first end (19) of the toggle joint (15) is suspended in an articulated manner on the rear of the panel-like element (7) and a second end (20) is suspended in an articulated manner on the transverse strut (14).

7. Vehicle seat according to any of Claims 1 to 3, **characterized in that** the hinge-like element is designed as at least one plate (25, 26) which is fitted with a first end (29, 30) on the rear (7c) of the panel-like element (7) and with a second end (27, 28) on a transverse strut (14) of the backrest frame, in each case mounted to pivot about a pivot axle which extends in the width direction of the backrest.

8. Vehicle seat according to any of the preceding claims, **characterized in that** the panel-like element (7) is fixed in a spring-mounted and/or freely suspended manner (21, 31; 10a) at the top (7a) to the upper end (6a) of the backrest frame (6).

9. Vehicle seat according to any of the preceding claims, **characterized in that** the panel-like element (7) is connected in a hinge-like manner (10b) at the bottom (7b) to the lower end (6b) of the backrest frame (6).

10. Vehicle seat according to any of the preceding claims, **characterized in that** the panel-like element (7) has different width and/or depth dimensions (32-37), such as profilings, in the course of its longitudinal direction.

## Revendications

1. Siège de véhicule comprenant un dossier (1) et une partie de siège (2), dans lequel le dossier (1) comprend un cadre de dossier (6) et des éléments (7, 8, 15, 25, 26) disposés à l'intérieur du cadre (6) du dossier pour former un dossier (1) avec une zone d'épaules (12), déformable dans une direction avant ou arrière et une zone de vertèbres lombaires (11) déformable dans la direction avant ou arrière, les éléments (7, 8, 15, 25, 26) comportant un élément souple en forme de plaque (7) s'étendant dans la direction longitudinale du cadre (6) du dossier, lequel élément est fixé de manière souple, en haut et en bas (7a, 7b), à une extrémité supérieure et à une extrémité inférieure (6a, 6b) du cadre (6) du dossier, dans lequel :
dans la zone (13) du cou et de la tête, entre le côté arrière supérieur (7c) de l'élément en forme de plaque (7) et le cadre (6) du dossier, est agencé au moins un élément formant charnière (15 ; 25, 26), dont le mouvement de pivot permet, dans la zone (13) du cou et de la tête, un déplacement parallèle (23a), dirigé vers l'avant ou l'arrière, du dossier (1) conformé en S,
**caractérisé en ce que** l'élément formant charnière (15 ; 15 ; 26) est suspendu de manière élastique dans la zone de l'extrémité supérieure du cadre (6) du dossier.

2. Siège de véhicule selon la revendication 1,
**caractérisé par**
un élément formant bascule (8) aménagé dans la zone (11) des vertèbres lombaires et pivotant autour d'un axe pivot s'étendant horizontalement, qui s'étend au moins en partie le long du côté arrière (7c) de l'élément en forme de plaque (7), dans sa direction longitudinale.

3. Siège de véhicule selon la revendication 2,
**caractérisé en ce que**
l'axe pivot (9) est déplaçable (8a) dans la direction longitudinale du dossier (1) pour être réglé en hauteur.

4. Siège de véhicule selon l'une quelconque des revendications précédentes,
**caractérisé en ce que**
l'élément formant charnière se présente sous la forme d'une charnière à genouillère (15) avec un axe de charnière (16) qui s'étend horizontalement et qui est aménagé de manière à s'étendre dans le sens de la largeur du dossier entre le côté arrière (7c) de l'élément en forme de plaque (7) et une entretoise (14) du cadre (6) du dossier.

5. Siège de véhicule selon la revendication 4,
**caractérisé en ce que**
l'axe de charnière (16) est accroché de manière élastique sur le cadre du dossier.

6. Siège de véhicule selon la revendication 4 ou 5,
**caractérisé en ce que**
une première extrémité (19) de la charnière à genouillère (15) est suspendue de manière articulée sur le côté arrière de l'élément en forme de plaque (7) et une seconde extrémité (20) st suspendue de manière articulée sur l'entretoise (14).

7. Siège de véhicule selon l'une quelconque des revendications 1 à 3,
**caractérisé en ce que**
l'élément formant charnière se présente sous la forme d'au moins une plaque (25, 26), qui est montée pivotante par une première extrémité (29, 30) au côté arrière (7c) de l'élément en forme de plaque (7) et par une seconde extrémité (27, 28) à une entretoise (14) du cadre du dossier autour d'un axe pivot s'étendant dans le sens de la largeur du dossier.

8. Siège de véhicule selon l'une quelconque des revendications précédentes,
**caractérisé en ce que**
l'élément en forme de plaque (7) est fixé, en haut (7a)de manière élastique et/ou à suspension libre (21, 31 ; 10a), à l'extrémité supérieure (6a) du cadre (6) du dossier.

9. Siège de véhicule selon l'une quelconque des revendications précédentes,
**caractérisé en ce que**
l'élément en forme de plaque (7) est relié en bas (7b) par charnière (10b), à l'extrémité inférieure (6b) du cadre (6) du dossier.

10. Siège de véhicule selon l'une quelconque des revendications précédentes,
**caractérisé en ce que**
l'élément en forme de plaque (7) présente, dans son extension dans la direction longitudinale, différentes dimensions de largeur et/ou de profondeur (32 à 37), notamment des cintrages.
